# EUROPEAN PATENT SPECIFICATION

(11) **EP 2 364 760 B1**
(45) Date of publication and mention of the grant of the patent: **21.05.2014**
(21) Application number: 10154682.8
(22) Date of filing: 25.02.2010
(51) Int. Cl.: F01N 3/037, B01D 21/26, B01D 53/14

(54) **Cleaning equipment for gas scrubber fluid**
Reinigungsausrüstung für Gaswäscheflüssigkeit
Équipement de nettoyage pour liquid de lavage de gaz

(43) Date of publication of application: 14.09.2011
(73) Proprietor: Alfa Laval Corporate AB, 221 00 Lund (SE)
(72) Inventor: Königsson, Staffan, 147 40 Tumba (SE); Sundquist, Lena, 112 64 Stockholm (SE)
(74) Representative: Alfa Laval Attorneys

(56) References cited:
- EP-A2- 0 492 758
- DE-A1- 4 030 830
- GB-A- 1 039 031
- JP-A- 2004 081 933
- US-A- 3 873 532
- US-A- 4 115 517
- US-A- 4 286 971
- US-A1- 2005 037 333

## Description

### BACKGROUND OF THE INVENTION AND PRIOR ART

The present invention relates to a cleaning equipment for gas scrubber fluid and a method for cleaning gas scrubber fluid.

The shipping industry of today strives to reduce harmful emissions, such as emissions originating from the combustion of fuel in the engine, in order to minimize the negative environmental impact and fulfill present and upcoming emission regulations.

One part in this is the reduction in sulphuric oxide (SOₓ) emissions from ships. Sulphuric oxides are created in the combustion of fuels containing sulphuric residues. The amount of sulphuric oxides in exhaust gas can be reduced by exhaust gas cleaning, e.g. by using scrubbers. The process of cleaning exhaust gas with the aid of the mentioned scrubbers produces polluted scrubber fluid.

Another object is the reductions in nitrogen oxides (NOₓ) emissions from marine engines. This can be done by implementing Exhaust Gas Recirculation (EGR), where part of the exhaust gas is recirculated to the combustion chamber of the engine. However, the amount of soot and particles in the exhaust gas needs to be decreased. It is therefore desirable to clean the exhaust gas, which can be done by using a scrubber. Also in this process polluted scrubber fluid is produced.

EP 701656 B1 discloses such equipment for recycling and cleaning of exhaust gas in a supercharged internal combustion engine. A scrubber purifies the recycled gas by using scrubber water. The scrubber water is then passed overboard or deposited to a tank for later purification.

The polluted scrubber fluid comprises soot or other organic or inorganic combustion residues. The release of such polluted scrubber fluid into the sea is unacceptable from an environmental point of view and is strictly regulated. On the other hand it is expensive and undesirable to transport larger amounts of waste material to a harbour for disposal.

JP 3868352 B2 discloses equipment for wastewater treatment where polluted seawater from a scrubber is stored in a storage tank and then cleaned using a combination of a centrifugal separator and two oil filters.

US 4286971 A and EP 492758 A2 disclose different systems for cleaning scrubber fluid by means of centrifugal separators.

The system of US 4286971 A exhibits a gas scrubber having an inlet for exhaust gas, a humidifying device for providing scrubber liquid to the exhaust gas and a droplet separator for removing polluted scrubber liquid comprising pollutant particles from the exhaust gas, the gas scrubber being connected by conduit means to a cleaning equipment for polluted scrubber liquid, comprising a centrifugal separator for separating at least a pollutant phase comprising pollutant particles and cleaned scrubber liquid from said polluted scrubber liquid, which centrifugal separator comprises a rotor enclosing a separation space with a stack of separating discs, a separator inlet for polluted scrubber liquid extending into said separating space, a first separator outlet for cleaned scrubber liquid extending from said separating space, and a second separator outlet for the pollutant phase extending from the radially outermost region of the separating space and being in the form of discharge ports arranged to be opened intermittently, during short periods, for discharge of the pollutant phase. The system further comprises means for conducting cleaned scrubber water from the first separator outlet via a buffer tank to the exhaust gas scrubber.

EP 492758 A2 discloses an exhaust gas cleaning equipment comprising a gas scrubber having an inlet for exhaust gas, a humidifying device for providing scrubber water to the exhaust gas and a droplet separator for removing polluted scrubber water comprising pollutant particles from the exhaust gas and collecting the scrubber water in a buffer tank at the bottom of the gas scrubber. The buffer tank is connected to a centrifugal separator comprising a rotor enclosing a separation space, a separator inlet for the polluted scrubber water extending into said separating space, and first and second separator outlets for cleaned scrubber water and the pollutant phase with the pollutant particles, respectively, extending from said separating space. Means are provided for conducting cleaned scrubber water via the buffer tank from the first separator outlet to the exhaust gas scrubber.

One problem is to improve the cleaning of the scrubber fluid.

A further problem is that pollutant particles in polluted scrubber fluid tend to adhere on process equipment and piping over time with the risk of a build up of soot scaling resulting in malfunctioning process equipment, sensors, transmitters and the like. Equipment relying on filter technology also has the drawback in the need for surveillance, service and replacement of filter components.

### THE INVENTION

Accordingly, the present invention provides a solution to the problems mentioned above by further improving environmental aspects of exhaust treatment procedures, improving the efficiency in exhaust treatment procedures, minimizing the need for service and diminishing problems with process equipment handling scrubber fluid.

Thus, the present invention relates to an exhaust gas cleaning equipment according to claim 1 comprising a centrifugal separator for separating at least a pollutant phase and a cleaned scrubber fluid from said polluted scrubber fluid. The centrifugal separator has a rotor enclosing a separation space with a stack of separating discs or a set of separating plates. The separating discs or plates may be frustoconical or have any other suitable shape. The centrifugal separator further comprises a separator inlet for polluted scrubber fluid extending into the separating space, a first separator outlet for cleaned scrubber fluid extending from the separating space, and a second separator outlet for the pollutant phase extending from the separating space. The cleaning equipment further comprises means for conducting polluted scrubber fluid from an exhaust gas scrubber to the separator inlet, and means for conducting cleaned scrubber fluid from the first separator outlet to the exhaust gas scrubber. The means for conducting polluted and cleaned scrubber fluid may comprise conduits, piping, tubing, tanks, pumps and the like.

It has been found that, by using a disc stack centrifugal separator the separation of the pollutant phase from exhaust gas scrubber fluid is surprisingly efficient. The separation in such a separator is gentle enough to maintain particles agglomerated and at the same time efficient by providing high separation forces and short separating distances. It has also been found that lighter liquid organic residues in the scrubber fluid, such as oil, tend to adhere to denser solid particles in the fluid in a way that makes it possible, in the disc stack separator, to separate the oil and the particles as a pollutant phase which is denser than the scrubber fluid. Thus the cleaning equipment does not have the same need for filters or other treatment steps and therefore improves the handling of the equipment by minimizing the need for service and replacement of key components. It has also been proven that by applying a disc stack centrifugal separator on the scrubber fluid, a large part of the pollutant phase can be removed in concentrated form and without the addition of chemicals. Therefore the volume of waste material can also be kept low.

The first separator outlet may be provided with a paring device, such as a paring disc, one or more paring tubes or the like. Such a paring device can be used for paring off fluid rotating with the rotor, and can act as a pump for fluid from the first separator outlet. The first separator outlet may also be provided with an external pump for pumping scrubber fluid. The pump can be of a centrifugal pump, a positive displacement pump or any other suitable type of pump.

The second separator outlet for the pollutant phase may extend from the separation space to a space outside the rotor. The centrifugal separator may further be provided with means to transporting the pollutant phase from the space outside the rotor to a container or the like. The second outlet extends from the radially outermost region of the separating space and is in the form of discharge ports. Such discharge ports are arranged to be opened intermittently, during short periods, for discharge of a separated phase with density higher than the cleaned scrubber fluid, i.e. the pollutant phase. The amount of pollutant phase, i.e. particles, in the discharge may be within the range of from about 5 to about 30 % by volume, preferably from about 10 to about 15 % by volume, depending on discharge frequency or nozzle size.

The separator may further be provided with a third separator outlet for another fluid phase which is denser or lighter than the scrubber fluid, such as oil.

The separator inlet may be of a hermetic type. A hermetic inlet is sealed from the surroundings of the rotor and is arranged to be filled with scrubber fluid during operation. In a hermetic type of inlet the acceleration of the fluid is initiated at a small radius and gradually increased while the fluid leaves the inlet and enters the separation space. By using an inlet of a hermetic type, shear forces acting on the particle agglomerates in the scrubber fluid can be minimized, thereby improving the separation efficiency of the pollutant phase even further.

The means for conducting cleaned scrubber fluid, from the first separator outlet to the exhaust gas scrubber, is arranged for conducting cleaned scrubber fluid from the first separator outlet to the exhaust gas scrubber via a buffer tank.

Thereby cleaned scrubber fluid from the first separator outlet is led to the buffer tank and thus the concentration of pollutant phase in the scrubber fluid in the buffer tank is held low. Problems with deposition of material onto sensitive parts of the equipment by fouling or scaling can therefore be minimized. Problems associated with clogging of piping and the formation and transportation of larger clusters of material in the cleaning equipment and scrubber can also be decreased. The means for conducting polluted scrubber fluid, from an exhaust gas scrubber to the separator inlet, is arranged for conducting polluted scrubber fluid from the exhaust gas scrubber to the separator inlet via the buffer tank. The scrubber fluid in the buffer tank may be continuously cleaned in the centrifugal separator, or cleaned when the concentration of pollutant in the buffer tank exceeds a certain level. Thereby the concentration of pollutant in the buffer tank can be minimized or held below a certain low level despite polluted scrubber fluid being provided from the exhaust gas scrubber.

The means for conducting polluted scrubber fluid from an exhaust gas scrubber to the separator inlet is arranged for conducting polluted scrubber fluid from the exhaust gas scrubber to the separator inlet via a buffer tank.

By incorporating a disc stack separator the need for filters or other treatment equipment could be minimized. Examples of treatment equipment are different kinds of filters, separators etc.

The cleaning equipment may further comprise a bypass for scrubber fluid communicating with the separator inlet and the first separator outlet. The bypass may be controlled by a valve. Thereby a controlled flow of scrubber fluid can be allowed to bypass the centrifugal separator when the fluid is hindered to pass through the separator, such as during intermittent discharge of the pollutant phase, during a service operation on the separator or during other conditions where the fluid is hindered to pass through the separator.

The cleaning equipment may further comprise means for adjusting the acidity of the scrubber fluid in order to compensate for acidic components, such as SOₓ, in the exhaust gas which may cause the scrubber fluid pH to decrease. The means may be adapted to keeping the acidity of the scrubber fluid above pH 6, in order to maintain particularly good separation performance.

The scrubber fluid is water. Scrubber fluid as initially included in the process of cleaning exhaust gas, or as added to the process during operation, may preferably be tap water, fresh water or desalinated seawater. The scrubber fluid is in one aspect meant to be water having an amount of chlorides less than, or much less than sea water. Tap water can be provided from tanks or produced on board by desalination of seawater. The scrubber fluid may however contain salts included from the scrubber process. The term scrubber fluid can be meant to include cleaned, polluted scrubber fluid, scrubber fluid initially included in the process or added to the process, or combinations thereof. Cleaned scrubber fluid has a reduced amount of pollutants, but may still comprise a low amount of pollutants. The pollutant phase separated from the polluted scrubber fluid may still comprise a certain amount of scrubber fluid. The pollutant phase may comprise solid or liquid particles comprising organic or inorganic combustion residues such as sulphuric oxide residues, soot, partly oxidized and unoxidized diesel oil and dissolved salts from oxidized metals. The pollutant phase may be denser, i.e. having a higher density, than the cleaned scrubber fluid. Particles generated in the combustion in the engine are normally very small, below the µm scale and typically within the range of from about 10 to about 30 nm. In a suitable fluid such as water they agglomerate into clusters within the µm scale such as within the range from about 5 to about 100 µm, particularly within the range from about 10 to about 30 µm.

The present invention also provides an exhaust gas cleaning equipment for a diesel engine, such as a large engine for a ship, comprising a gas scrubber having an inlet for exhaust gas, a humidifying device for providing a scrubber fluid to the exhaust gas and a droplet separator for removing polluted scrubber fluid from the exhaust gas, connected to a cleaning equipment according to the invention. The cleaning equipment according to the invention is also applicable to similar land based scrubber installations.

In another aspect of the present invention, a method for cleaning polluted scrubber fluid according to claim 4 is provided, comprising the steps of;
- providing polluted scrubber fluid from an exhaust gas scrubber via a buffer tank
- separating, in a disc stack centrifugal separator, a pollutant phase from the polluted scrubber fluid, thereby providing a cleaned scrubber fluid, and
- providing cleaned scrubber fluid to the exhaust gas scrubber

The method may be performed in a cleaning equipment according to the present invention.

The method further comprises the steps of providing cleaned scrubber fluid from the centrifugal separator to a buffer tank, and providing cleaned scrubber fluid from the buffer tank to the exhaust gas scrubber.

The method further comprises a step of discharging the separated pollutant phase from the centrifugal separator.

Further alternative embodiments of the present invention are defined in the claims. Various embodiments of the invention will now be explained in more detail with reference to the drawings. The drawings are for the purpose of illustrating the invention and are not intended to limit its scope.

### BRIEF DESCRIPTION OF THE DRAWINGS

- Figure 1: shows a cleaning equipment according to one embodiment of the invention.
- Figure 2: shows a cleaning equipment according to another embodiment not part of the invention.
- Figure 3: shows a cleaning equipment according to yet another embodiment not part of the invention.
- Figure 4: shows a cleaning equipment according to a further embodiment not part of the invention.

### DETAILED DESCRIPTION OF EMBODIMENTS OF THE INVENTION

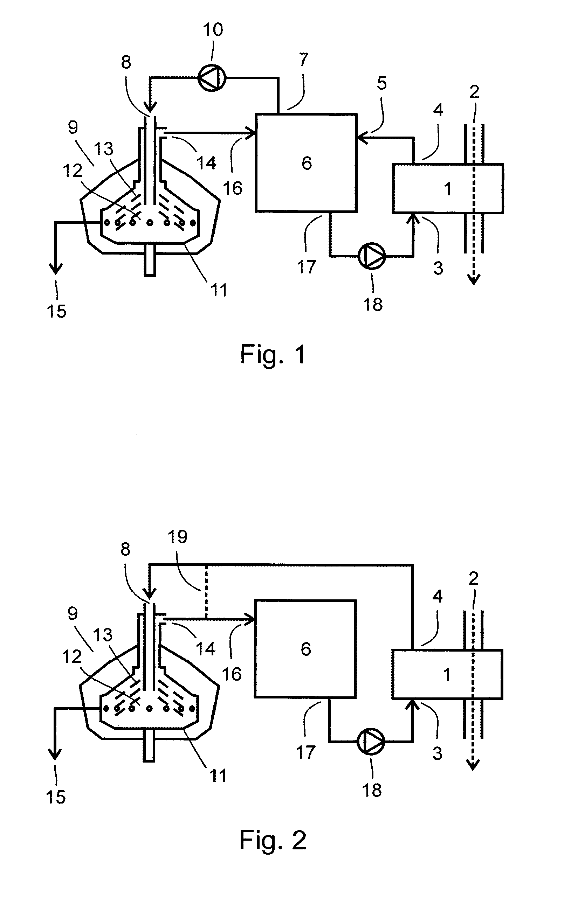

A cleaning equipment for gas scrubber fluid is shown in Fig. 1, connected to an exhaust gas scrubber 1. The exhaust gas scrubber 1 acts on an exhaust conduit 2 of a large diesel engine, such as the main engine of a ship. The scrubber is provided with a scrubber inlet 3 and a scrubber outlet 4 for scrubber fluid. The scrubber outlet 4 is connected to an inlet 5 of a buffer tank 6 for scrubber fluid. Starting from an outlet 7 the buffer tank 6 is provided with a cleaning loop for scrubber fluid connected to a separator inlet 8 of a centrifugal separator 9 via a separator feed pump 10. The centrifugal separator 9 has a rotor 11 enclosing a separation space 12 which contains a stack of frustoconical separating discs 13 to which separation space the separator inlet 8 extends.

The centrifugal separator 9 is further provided with a first separator outlet 14 for cleaned scrubber fluid, and a second outlet 15 extending from the separating space through the rotor in the form of discharge ports or nozzles for discharge of a separated phase with density higher than the cleaned scrubber fluid. The first separator outlet 14 is connected to an inlet 16 on the buffer tank 6, closing the cleaning loop. The buffer tank is provided with another outlet 17 for providing scrubber fluid to the exhaust gas scrubber, wherein the outlet 17 is connected to the inlet 3 of the scrubber 1 via a scrubber feed pump 18.

During operation, scrubber fluid is provided from the buffer tank 6 to the scrubber inlet 3 via the scrubber feed pump 18. Scrubber fluid is atomised in the scrubber and supplied to a flow of exhaust gas in or from the exhaust conduit 2. In the scrubber, the scrubber fluid is used in cleaning of organic and inorganic combustion residues from the exhaust gas. The resulting mixture of scrubber fluid and exhaust gas combustion residues is separated from the gas stream in the form of droplets and is led back to the buffer tank 6 from the scrubber outlet 4 and the inlet 5 for scrubber fluid of the cleaning equipment. Exhaust gas combustion residues contained in the scrubber fluid in the form of small particles are agglomerated into larger particles in the fluid, forming a pollutant phase. Scrubber fluid in the buffer tank 6 is, continuously or when needed, sent via the outlet 7 into the cleaning loop by means of the separator feed pump 10 to the separator inlet 8 of the centrifugal separator 9. The scrubber fluid containing the pollutant phase is introduced into the separating space 12 contained in the rotor 11 of the centrifugal separator 9 rotating at a high speed and further into the disc stack 13. The pollutant phase has a mean density that is higher than the scrubber fluid. Under the influence of centrifugal forces and facilitated by the inclined surfaces of the separating discs, the pollutant phase is separated from the scrubber fluid and collected at a radially outer region of the separation space from which it is discharged via the second separator outlet 15. The second separator outlet 15 is in the form of discharge ports or nozzles and the particles are intermittently discharged from the centrifugal separator by opening the discharge ports at the periphery of the rotor 11 for a short period of time or continuously discharged via open nozzles at the periphery of the rotor. The discharging can be performed while scrubber fluid is still fed into the centrifugal separator or temporarily shut off. The discharged pollutant phase may be collected on the ship for later disposal. The concentration of the pollutant phase in the discharge is within the range from about 10 to about 15 % by volume, depending on the discharge frequency or nozzle size. The cleaned scrubber fluid is discharged from the first separator outlet 14 and sent back to the buffer tank from which it is transported to the exhaust gas scrubber.

The cleaning equipment for gas scrubber fluid shown in Fig. 2 is connected to an exhaust gas scrubber 1 which is acting on an exhaust conduit 2 from a large diesel engine, such as the main engine of a ship. The scrubber is provided with a scrubber inlet 3 and a scrubber outlet 4 for scrubber fluid. The scrubber outlet 4 is connected to a separator inlet 8 of a centrifugal separator 9. The centrifugal separator 9 has a rotor 11 enclosing a separation space 12 which contains a stack of frustoconical separating discs 13 to which space the separator inlet 8 extends. The centrifugal separator 9 is further provided with a first separator outlet 14 for cleaned scrubber fluid, and a second outlet 15 extending from the separating space through the rotor in the form of discharge ports or nozzles for discharge of a separated phase with density higher than the cleaned scrubber fluid. A bypass conduit 19 controlled by a valve connects the separator inlet 8 with the first separator outlet 14, thereby allowing scrubber fluid to bypass the separator during intermittent discharge, during a service operation on the separator or during other conditions where the fluid is hindered to pass through the separator. The first separator outlet 14 is connected to the buffer tank 6. The buffer tank is provided with another outlet 17 for leading scrubber fluid to the exhaust gas scrubber, wherein the outlet 17 is connected to the inlet 3 for scrubber fluid of the scrubber 1 via a scrubber feed pump 18.

During operation, scrubber fluid is continuously provided from the buffer tank 6 to the scrubber inlet 3 via the scrubber feed pump 18. The function of the scrubber 1 is as described above. The mixture of scrubber fluid and exhaust gas combustion residues is led to the separator inlet 8 of the centrifugal separator and the flow of fluid from the scrubber to the centrifugal separator is driven by an overpressure in the scrubber. The scrubber fluid containing the pollutant phase is introduced into the separating space 12 in the rotor of the centrifugal separator 9, where the pollutant phase is separated from the scrubber fluid, in accordance with the description of Fig. 1. The pollutant phase is discharged via the second separator outlet 15. Clean scrubber fluid is led from the first separator outlet 14 to the buffer tank 6. During intermittent discharge, during a service operation on the separator or during other conditions where the fluid is hindered to pass through the separator, the bypass 19 is opened and scrubber fluid is fed past the centrifugal separator. The cleaned scrubber fluid is yet again led from the buffer tank 6 to the scrubber inlet 3 via the scrubber feed pump 18.

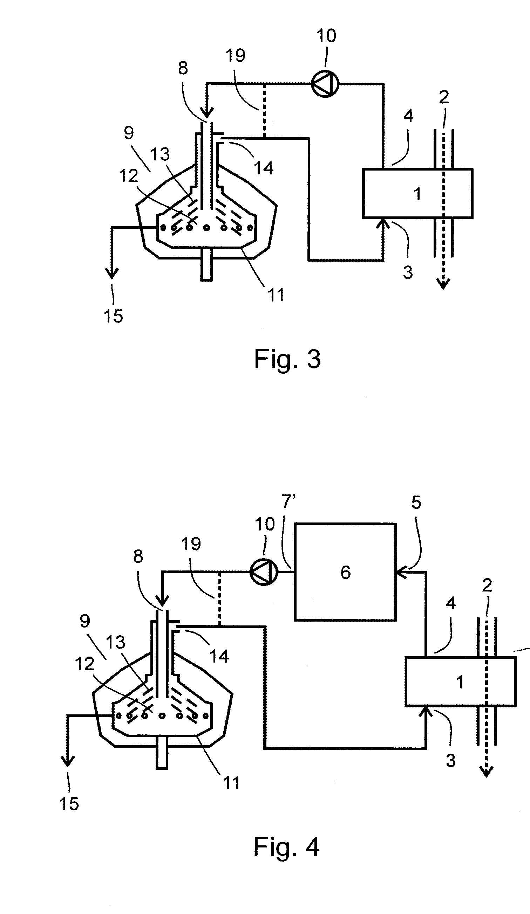

Another example of a cleaning equipment for gas scrubber fluid is shown in Fig. 3. The cleaning equipment is connected to an exhaust gas scrubber 1 which is acting on an exhaust conduit 2 as previously described. The scrubber is provided with a scrubber inlet 3 and a scrubber outlet 4 for scrubber fluid. The scrubber outlet 4 is connected to a separator inlet 8 of a centrifugal separator 9, via an optional separator feed pump 10. The centrifugal separator 9 has a rotor 11 enclosing a separation space 12 which contains a stack of frustoconical separating discs 13 to which space the separator inlet 8 extends. The centrifugal separator 9 is further provided with a first separator outlet 14 for cleaned scrubber fluid extending from an radially inner region of the separation space, and a second outlet 15 extending from an radially outer region of the separating space in the form of discharge ports or nozzles for discharge of a separated phase with density higher than the cleaned scrubber fluid. A bypass conduit 19 controlled by a valve connects the separator inlet 8 with the first separator outlet 14, thereby allowing scrubber fluid to bypass the separator during intermittent discharge, during a service operation on the separator or during other conditions where the fluid is hindered to pass through the separator. The first separator outlet 14 directly leads to the inlet 3 for scrubber fluid of the scrubber 1, without any further filtration or other treatment equipments. However if a higher pressure is needed than what is delivered by the centrifugal separators internal pump, a booster pump can be installed on the first separator outlet 14.

During operation, scrubber fluid is continuously circulated in the circuit and provided to the scrubber inlet 3. The function of the scrubber 1 is as described above. The mixture of scrubber fluid and exhaust gas combustion residues is directed to the separator inlet 8 of the centrifugal separator 9 and the flow of fluid from the scrubber to the centrifugal separator is driven by the feed pump 10. Optionally the flow of fluid from the scrubber to the centrifugal separator is driven by an overpressure in the scrubber. The scrubber fluid containing the pollutant phase is introduced into the separating space 12 where the pollutant phase is separated from the scrubber fluid, in accordance with the description of Fig. 1. The pollutant phase is discharged via the second separator outlet 15. During intermittent discharge, during a service operation on the separator or during other conditions where the fluid is hindered to pass through the separator, the bypass 19 is opened and scrubber fluid is fed past the centrifugal separator. Clean scrubber fluid is led from the first separator outlet 14 directly to the inlet 3 for scrubber fluid of the scrubber 1.

Another example of a cleaning equipment for gas scrubber fluid according to the invention is shown in Fig. 4. The cleaning equipment is connected to an exhaust gas scrubber 1 which is acting on an exhaust conduit 2 as described above. The scrubber is provided with a scrubber inlet 3 and a scrubber outlet 4 for scrubber fluid. The scrubber outlet 4 is connected to an inlet 5 of a buffer tank 6 for scrubber fluid. The buffer tank 6 is provided with an outlet 7' connected to the separator inlet 8 of the centrifugal separator 9, via a separator feed pump 10. The centrifugal separator 9 has a rotor 11 enclosing a separation space 12 which contains a stack of frustoconical separating discs 13 to which separation space the separator inlet 8 extends. The centrifugal separator 9 is further provided with a first separator outlet 14 for cleaned scrubber fluid extending from an radially inner region of the separation space, and a second outlet 15 extending from an radially outer region of the separating space in the form of discharge ports or nozzles for discharge of a separated phase with density higher than the cleaned scrubber fluid. A bypass conduit 19 controlled by a valve connects the separator inlet 8 with the first separator outlet 14, thereby allowing scrubber fluid to bypass the separator during discharge, service or other conditions where the fluid is hindered to pass through the separator. The first separator outlet 14 directly leads to the inlet 3 for scrubber fluid of the scrubber 1, without any further filtration or other treatment equipments.

During operation, scrubber fluid is continuously circulated in the circuit and provided to the scrubber inlet 3. The function of the scrubber 1 is as described above. The mixture of scrubber fluid and exhaust gas combustion residues is directed to the buffer tank 6 and further to the separator inlet 8 of the centrifugal separator 9 via the outlet 7' of the buffer tank by means of the separator feed pump 10. The scrubber fluid containing the pollutant phase is introduced into the separating space 12 where the pollutant phase is separated from the scrubber fluid, in accordance with the description of Fig. 1. The pollutant phase is discharged via the second separator outlet 15. During discharge, service or other conditions where the fluid is hindered to pass through the separator, the bypass 19 is opened and scrubber fluid is fed past the centrifugal separator. Clean scrubber fluid is led from the first separator outlet 14 directly to the inlet 3 for scrubber fluid of the scrubber 1.

## Claims

1. An exhaust gas cleaning equipment for a diesel engine, comprising a gas scrubber (1) having an inlet for exhaust gas, a humidifying device for providing scrubber water to the exhaust gas and a droplet separator for removing polluted scrubber water comprising pollutant particles from the exhaust gas, the gas scrubber being connected to a cleaning equipment for polluted scrubber water, comprising a centrifugal separator (9) for separating at least a pollutant phase comprising pollutant particles and cleaned scrubber water from said polluted scrubber water, which centrifugal separator comprises a rotor (11) enclosing a separation space (12) with a stack of separating discs (13), a separator inlet (8) for polluted scrubber water extending into said separating space, a first separator outlet (14) for cleaned scrubber water extending from said separating space, and a second separator outlet (15) for the pollutant phase extending from the radially outermost region of the separating space and being in the form of discharge ports arranged to be opened intermittently, during short periods, for discharge of the pollutant phase, which exhaust gas cleaning equipment further comprises means for conducting polluted scrubber water from the gas scrubber to the separator inlet, means for conducting cleaned scrubber water from the first separator outlet to the gas scrubber, and a buffer tank (6), wherein the means for conducting cleaned scrubber water from the first separator outlet to the gas scrubber are arranged for conducting cleaned scrubber water from the first separator outlet (14) to the gas scrubber (1) via the buffer tank and further wherein the means for conducting polluted scrubber water from the gas scrubber to the separator inlet are arranged for conducting polluted scrubber water from the gas scrubber to the separator inlet via the buffer tank.

2. An exhaust gas cleaning equipment according to any one of the preceding claims, wherein the separator inlet is of a hermetic type.

3. An exhaust gas cleaning equipment according to any one of the preceding claims, further comprising a bypass communicating with the separator inlet and the first separator outlet.

4. A method for cleaning polluted scrubber water comprising pollutant particles, comprising the steps of;
- providing a disc stack centrifugal separator, which centrifugal separator comprises a rotor (11) enclosing a separation space (12) with a stack of separating discs (13), a separator inlet (8) for polluted scrubber water extending into said separating space, a first separator outlet (14) for cleaned scrubber water extending from said separating space, and a second separator outlet (15) for the pollutant phase extending, from the radially outermost region of the separating space and being in the form of discharge ports arranged to be opened intermittently, during short periods, for discharge of the pollutant phase,
- providing polluted scrubber water from a gas scrubber, to the disc stack centrifugal separator via a buffer tank,
- separating, in the disc stack centrifugal separator, a pollutant phase comprising pollutant particles from the polluted scrubber water, thereby providing a cleaned scrubber water,
- discharging the separated pollutant phase from the centrifugal separator,
- providing cleaned scrubber water from the centrifugal separator to the buffer tank, and
- providing cleaned scrubber water from the buffer tank to the gas scrubber.

## Patentansprüche

1. Abgasreinigungsausrüstung für einen Dieselmotor, umfassend einen Gaswäscher (1) mit einem Einlass für Abgas, eine Befeuchtungsvorrichtung zum Bereitstellen von Waschwasser an das Abgas und einen Tropfenabscheider zum Entfernen von verunreinigtem Waschwasser, das Verunreinigungspartikel aus dem Abgas enthält, wobei der Gaswäscher mit einer Reinigungsausrüstung für verunreinigtes Waschwasser verbunden ist, die einen Zentrifugalabscheider (9) zum Abscheiden wenigstens einer Verunreinigungsphase mit Verunreinigungspartikeln und gereinigtem Waschwasser aus dem verunreinigten Waschwasser umfasst, wobei der Zentrifugalabscheider einen Rotor (11), der einen Abscheideraum (12) mit einem Stapel von Abscheidescheiben (13) umschließt, einen Abscheidereinlass (8) für die Ausdehnung verunreinigten Waschwassers in den Abscheideraum, einen ersten Abscheiderauslass (14) für die Ausdehnung gereinigten Waschwassers aus dem Abscheideraum und einen zweiten Abscheiderauslass (15) für die Ausdehnung der Verunreinigungsphase aus dem radial am äußersten gelegenen Bereich des Abscheideraums und in Form von Auslassöffnungen, die angeordnet sind, um periodisch kurzzeitig zur Ausleitung der Verunreinigungsphase geöffnet zu werden, umfasst, wobei die Abgasreinigungsausrüstung weiterhin Vorrichtungen zum Leiten von verunreinigtem Waschwasser vom Gaswäscher zum Abscheidereinlass, Vorrichtungen zum Leiten gereinigten Waschwassers vom ersten Abscheiderauslass zum Gaswäscher und einen Puffertank (6) umfasst, wobei die Vorrichtungen zum Leiten gereinigten Waschwassers vom ersten Abscheiderauslass zum Gaswäscher angeordnet sind, um gereinigtes Waschwasser vom ersten Abscheiderauslass (14) über den Puffertank zum Gaswäscher (1) zu leiten und wobei weiterhin die Vorrichtungen zum Leiten verunreinigten Waschwassers vom Gaswäscher zum Abscheidereinlass angeordnet sind, um verunreinigtes Waschwasser vom Gaswäscher über den Puffertank zum Abscheidereinlass zu leiten.

2. Abgasreinigungsausrüstung nach einem der vorstehenden Ansprüche, wobei der Abscheidereinlass von hermetischem Typ ist.

3. Abgasreinigungsausrüstung nach einem der vorstehenden Ansprüche, ferner umfassend eine Nebenleitung, die mit dem Abscheidereinlass und dem ersten Abscheiderauslass in Verbindung steht.

4. Verfahren zum Reinigen von verunreinigtem Waschwasser, das Verunreinigungspartikel umfasst, die folgenden Schritte umfassend;
- Bereitstellen eines Zentrifugalabscheiders mit Scheibenstapel, wobei der Zentrifugalabscheider einen Rotor (11), der einen Abscheideraum (12) mit einem Stapel von Abscheidescheiben (13) umschließt, einen Abscheidereinlass (8) für die Ausdehnung verunreinigten Waschwassers in den Abscheideraum, einen ersten Abscheiderauslass (14) für die Ausdehnung gereinigten Waschwassers aus dem Abscheideraum und einen zweiten Abscheiderauslass (15) für die Ausdehnung der Verunreinigungsphase aus dem radial am äußersten gelegenen Bereich des Abscheideraums und in Form von Auslassöffnungen, die angeordnet sind, um periodisch kurzzeitig zur Ausleitung der Verunreinigungsphase geöffnet zu werden, umfasst,
- Bereitstellen von verunreinigtem Waschwasser von einem Gaswäscher über einen Puffertank zu einem Zentrifugalabscheider mit Scheibenstapel,
- Abscheiden einer Verunreinigungsphase mit Verunreinigungspartikeln aus dem verunreinigten Waschwasser im Zentrifugalabscheider mit Scheibenstapel, so dass gereinigtes Waschwasser bereitgestellt wird,
- Ausleiten der abgeschiedenen Verunreinigungsphase aus dem Zentrifugalabscheider,
- Bereitstellen von gereinigtem Waschwasser vom Zentrifugalabscheider an den Puffertank, und
- Bereitstellen von gereinigtem Waschwasser vom Puffertank zum Gaswäscher.

## Revendications

1. Équipement de nettoyage de gaz d'échappement destiné à un moteur diesel, comprenant un épurateur de gaz (1) ayant un point d'admission pour gaz d'échappement, un dispositif d'humidification pour fournir de l'eau de lavage au gaz d'échappement et un séparateur de gouttelettes pour extraire du gaz d'échappement l'eau de lavage polluée comprenant des particules polluantes, l'épurateur de gaz étant relié à un équipement de nettoyage de l'eau de lavage polluée, comprenant un séparateur centrifuge (9) pour séparer au moins une phase polluante contenant des particules polluantes et de l'eau de lavage nettoyée provenant de ladite eau de lavage polluée, lequel séparateur centrifuge comprend un rotor (11) renfermant un espace de séparation (12) comportant une pile d'assiettes de séparation (13), un point d'admission du séparateur (8) pour eau de lavage polluée s'étendant dans ledit espace de séparation, un premier point d'échappement du séparateur (14) pour eau de lavage nettoyée s'étendant à partir dudit espace de séparation, et un deuxième point d'échappement du séparateur (15) pour phase polluante s'étendant à partir de la région radialement la plus à l'extérieur de l'espace de séparation et se présentant sous la forme d'orifices de refoulement disposés pour être ouverts par intermittence pendant de courtes périodes pour évacuer la phase polluante, lequel équipement de nettoyage du gaz d'échappement comprend par ailleurs des moyens pour transporter l'eau de lavage polluée de l'épurateur de gaz au point d'admission du séparateur, des moyens pour transporter l'eau de lavage nettoyée du premier point d'échappement du séparateur à l'épurateur de gaz et un réservoir tampon (6), les moyens pour transporter l'eau de lavage nettoyée du premier point d'échappement du séparateur à l'épurateur de gaz étant disposés pour transporter l'eau de lavage nettoyée du premier point d'échappement du séparateur (14) à l'épurateur de gaz (1) via le réservoir tampon et, en outre, les moyens pour transporter l'eau de lavage polluée de l'épurateur de gaz au point d'admission du séparateur étant agencés de manière à transporter l'eau de lavage polluée de l'épurateur de gaz au point d'admission du séparateur via le réservoir tampon.

2. Équipement de nettoyage de gaz d'échappement selon l'une quelconque des revendications précédentes, dans lequel le point d'admission du séparateur est de type hermétique.

3. Équipement de nettoyage de gaz d'échappement selon l'une quelconque des revendications précédentes, comprenant de plus un tube de contournement communiquant avec le point d'admission du séparateur et le premier point d'échappement du séparateur.

4. Procédé de nettoyage d'eau de lavage polluée comprenant des particules polluantes, comprenant les étapes suivantes consistant à :
- fournir un séparateur centrifuge à assiettes, ledit séparateur centrifuge comprenant un rotor (11) renfermant un espace de séparation (12) comportant une pile d'assiettes de séparation (13), un point d'admission du séparateur (8) pour eau de lavage polluée s'étendant dans ledit espace de séparation, un premier point d'échappement du séparateur (14) pour eau de lavage nettoyée s'étendant à partir dudit espace de séparation et un deuxième point d'échappement du séparateur (15) pour la phase polluante s'étendant à partir de la région radialement la plus à l'extérieur de l'espace de séparation et se trouvant sous la forme d'orifices d'échappement disposés pour être ouverts de manière intermittente pendant de courtes périodes, pour évacuer la phase polluante,
- fournir de l'eau de lavage polluée, en provenance de l'épurateur de gaz, vers le séparateur centrifuge à assiettes via un réservoir tampon,
- séparer, dans le séparateur centrifuge à assiettes, une phase polluante comprenant des particules polluantes provenant de l'eau de lavage polluée, produisant ainsi une eau de lavage nettoyée,
- évacuer la phase polluante séparée du séparateur centrifuge,
- fournir de l'eau de lavage nettoyée, en provenance du séparateur centrifuge, au réservoir tampon et
- fournir de l'eau de lavage nettoyée en provenance du réservoir tampon vers l'épurateur de gaz.
